# EUROPÄISCHE PATENTSCHRIFT

(11) **EP 1 633 589 B1**
(45) Veröffentlichungstag und Bekanntmachung des Hinweises auf die Patenterteilung: **09.05.2007**
(21) Anmeldenummer: 04738636.2
(22) Anmeldetag: 10.06.2004
(51) Int. Cl.: B60K 15/04

(54) **Vorrichtung und Verfahren zur Sicherung eines Tankinhalts**
Device and method for protecting the contents of a tank
Dispositif et procédé pour proteger le contenu d'un reservoir

(30) Priorität: 13.06.2003 DE 10326587
(43) Veröffentlichungstag der Anmeldung: 15.03.2006
(73) Patentinhaber: Gresens, Dieter, 03170 Rojales / Alicante (ES)
(72) Erfinder: Gresens, Dieter, 03170 Rojales / Alicante (ES)
(74) Vertreter: Hansen, Jochen
(86) Internationale Anmeldenummer: PCT/DE2004/001184
(87) Internationale Veröffentlichungsnummer: WO 2004/113109

(56) Entgegenhaltungen:
- WO-A-97/18966
- DE-A- 10 117 536
- DE-A- 19 956 349
- DE-C- 939 489
- US-A- 5 791 387

## Beschreibung

Die Erfindung betrifft eine Vorrichtung für einen Tankstutzen eines Tankes zur Sicherung des Tankinhalts.

Der Inhalt von Flüssigtanks birgt häufig eine sehr wertvolle Ladung. Dabei sind frei zugängliche Tankanlagen, insbesondere mobile aber auch stationäre Anlagen, nur schwierig vor einer unerwünschten Entnahme zu schützen. Bei Hausheizöltanks, Betankungsanlagen für Heizöl, Diesel- oder Benzinkraftstoff oder anderen flüssigen Stoffen oder bei Kraftfahrzeugen, beispielsweise Schiffen, Sportbooten, Lastkraftwagen oder Spezialfahrzeugen sind häufig einige hundert Liter bevorratet. Entsprechend groß ist das Interesse, die im Tank bevorratete Flüssigkeit durch Abpumpen zu entwenden. Insbesondere bei Lastkraftwagen ist der Dieseltreibstoffdiebstahl bereits ein erheblicher Störfaktor, der die betroffenen Speditionen wirtschaftlich stark schädigt.

Die üblichen Sicherungsmaßnahmen zum Schutz vor unbefugtem Zugriff auf den Tankinhalt durch Vorsehen abschließbarer Tankdeckel ist dabei nicht ausreichend. Die in exponierter Lage am äußeren Ende des Tankstutzens aufgesetzten abschließbaren Tankdeckel können relativ schnell aufgebrochen werden.

Ferner sind Verschlussvorrichtungen für Kraftstoffbehälter in unterschiedlicher Ausgestaltung bekannt.

Die DE 34 32 873 A1 beschreibt eine im Bereich des Behälteranschlussstutzens um eine Achse schwenkbare Rückschlagklappe, die beim Betanken des Kraftstoffbehälters gegen eine federbelastete Rückstellkraft den Strömungsweg in den Kraftstoffbehälter freigibt und sonst einen Rückfluss des Kraftstoffes aus dem Kraftstoffbehälter in den Tankstutzen vermeiden soll. Ein unberechtigter Zugriff ist mit dieser Rückschlagklappe jedoch nicht verwehrt, da die Klappe durch Einführen eines Schlauches oder Rohres vom freien Ende des Tankstutzens öffenbar ist und dann der gesamte Tankinhalt abgezogen werden kann.

Aus der DE 694 01 570 T2 ist eine Anordnung zum Betanken eines Kraftstoffbehälters eines Fahrzeuges bekannt, bei der eine ebenfalls in Richtung der Schließstellung federkraftvorbelastete, hier zweiteilige Klappe als Tankverschluss dient. Gegenüber dem vorgenannten Stand der Technik wird hier die in Schließstellung federkraftbelastete Klappe durch den Hahn der Kraftstoffpistole beim Betanken geöffnet. Dieser Verschluss kann also auch durch Einführen eines entsprechenden Rohrstückes zum unbefugten Zugriff auf den Tankinhalt geöffnet werden.

Ferner ist aus der DE 100 19 375 A1 eine Verschlussvorrichtung für einen Kraftstoffbehälter in einem Kraftfahrzeug bekannt, bei dem am kraftstoffbehälterseitigen Ende des Tankstutzens ein von einem Füllstandsgeber betätigbarer Deckel vorgesehen ist, wobei der Deckel von dem Füllstandsgeber zwischen einer Offenposition, bei der der Querschnitt des Tankstutzens im wesentlichen frei flüssigkeitsdurchlässig ist, und einer Verschlussstellung, bei der der Querschnitt des Tankstutzens im wesentlichen versperrt ist, verstellbar ist. Mit dieser Vorrichtung soll auf einfache Weise verhindert werden, dass das zum Kraftstoffbehälter gehörende Entlüftungssystem nicht beim Befüllen des Behälters mit Kraftstoff gefüllt wird und nicht mehr bestimmungsgemäß funktionieren kann. Eine Zugriffssperre auf den Tankinhalt ist mit dieser Vorrichtung weder bezweckt noch erfüllt. Sobald der Füllstand des Kraftstoffbehälters unterhalb des Maximalwertes ist, gibt der Füllstandsgeber den Sperrkörper der Verschlussvorrichtung frei, so dass freier Zugriff zwischen Tankstutzen und Kraftstoffbehälter gegeben ist.

Eine Vorrichtung gemäß Oberbegriff von Anspruch 1 ist aus der US 5,791,387 A bekannt. Diese Vorrichtung kann einen beispielsweise als Schraubverschluss ausgebildeten herkömmlichen Tankstutzenverschluss ersetzen und soll unbeabsichtigtes Heraustropfen von Kraftstoff aus dem Tankstutzen vermeiden. Ein Schutz vor unberechtigter Entnahme ist explizit nicht vorgesehen.

Aufgabe der Erfindung ist es, eine Vorrichtung anzugeben, bei der der Tankinhalt vor unberechtigter Entnahme besser gesichert ist.

Gelöst wird diese Aufgabe mit einer Vorrichtung gemäß Anspruch 1.

Im Tankstutzen sind ein betätigbarer Deckel und ein elektrisch, hydraulisch oder pneumatisch betätigbarer Stelltrieb vorgesehen, wobei der Deckel von dem Stelltrieb zwischen einer Offenposition, bei der der Querschnitt des Tankstutzens im wesentlichen frei flüssigkeitsdurchlässig ist, und einer Verschlussstellung, bei der der Querschnitt des Tankstutzens im wesentlichen versperrt ist, abhängig von vorgebbaren Steuerbedingungen verstellbar ist. Somit wird innerhalb des Tankstutzens in Verschlussstellung des eingefügten Deckels ein freier Durchgriff versperrt. Ein Treibstoffdieb ist also daran gehindert, einen Schlauch oder ein Rohr zum Absaugen des Tankinhalts durch den Tankstutzen in den Tank einzuführen. Ein Abpumpen des Tankinhalts ist somit nicht möglich.

Die Vorrichtung befindet sich standardmäßig in Verschlussstellung und wird wenigstens während eines Betankungsvorganges in Offenposition geschaltet. Damit wird sichergestellt, dass beim Betankungsvorgang des Tankes über den Tankstutzen die zugeführte Flüssigkeit ungehindert in den Tank strömen kann. Nach Beendigung des Tankvorgangs wird dann die Vorrichtung wieder in die Verschlussstellung zurückgeschaltet. Die Freischaltung kann dabei über einen nur für befugte Personen zugänglichen Schalter ferngesteuert erfolgen. Darüber hinaus sind auch andere vorgebbare Steuerbedingungen, beispielsweise mit dem Betankungsvorgang zusammenhängende Tätigkeiten, die die Freischaltung der Vorrichtung bewirken können, denkbar.

Bei Verwendung der Vorrichtung in einem Kraftfahrzeug wird beispielsweise bei Betrieb des Fahrzeugs die Vorrichtung in Offenposition geschaltet, während bei Außerbetriebnahme des Kraftfahrzeugs die Vorrichtung automatisch in Verschluss-Stellung zurückfällt, womit eine automatische Sicherung des Tankinhalts bei Außerbetriebnahme des Kraftfahrzeugs, beispielsweise bei stehendem Motor erreicht wird. Dies wird beispielsweise dadurch erreicht, dass der Stelltrieb zum Schalten zwischen Offenposition und Verschlussposition vom Luftdruck einer Luftdruckbremsanlage des Kraftfahrzeugs gesteuert wird.

Alternativ könnte das Freischalten des Tankstutzens auch über elektrische Steuerimpulse, beispielsweise von einem Schalter, erreicht werden. Dabei ist es denkbar, dass im Kraftfahrzeug eine gesonderte Zündschlüsselstellung "Tanken" vorgesehen ist, wobei nur in dieser Stellung die Vorrichtung im Tankstutzen in Offenposition gestellt ist. Damit wäre gewährleistet, dass selbst im Fahrbetrieb, im Kraftfahrzeugleerlauf sowie selbstverständlich bei abgestelltem Fahrzeug ein Zugriff zum Tankinhalt über den Tankstutzen durch die aktivierte Verschlussstellung der Vorrichtung versperrt ist. Die Betätigung des Deckels könnte dabei vom Stelltrieb elektromagnetisch oder elektromotorisch oder auch in Kombination mit hydraulischem und/oder pneumatischem Antrieb erfolgen.

Für den Einsatz bei Lastkraftfahrzeugen mit einer Luftdruckbremse ist der Stelltrieb bevorzugt ein Luftdrucksteuergerät, das über einen vorwählbaren Luftdruck den Deckel in Offenposition stellt und bei Unterschreiten des vorwählbaren Luftdruckes der Deckel selbsttätig in die Verschluss-Stellung fällt. Es kann somit der in der Luftdruckbremsanlage erzeugte Luftdruck zum Verstellen der Deckel verwendet werden.

Wenn der Deckel wenigstens zwei Deckelteile aufweist, kann sich der Deckel innerhalb des Tankstutzens flügelartig zusammen- bzw. entfalten. Selbstverständlich ist auch eine drei-, vier- und mehrteilige Ausführung des Deckels denkbar. Die in Offenposition aufgefalteten Deckelteile behindern den Flüssigkeitsdurchlass im Tankstutzen nur unwesentlich, womit der übliche Betankungsvorgang ungestört möglich ist.

Wenn die Deckelteile um tangential zur Rohrachse des Tankstutzens angeordnete Drehachsen schwenkbar gelagert sind, können sich die Deckelteile in ihrer Offenposition mit ihrer Flächenausdehnung parallel zum Kraftstoffdurchfluss beim Betanken einstellen, erzeugen also minimalen Strömungswiderstand.

Wenn der Stelltrieb einen lateralen Stellhub aufweist, der entlang der Rohrachse des Tankstutzens wirkt, kann die Hubbewegung besonders einfach zum Öffnen des Deckels herangezogen werden.

Dadurch, dass der Stelltrieb an einem im Tankstutzen befestigten Stegring angeordnet ist, wobei der laterale Stellhub des Stelltriebes auf den Deckel oder die Deckelteile wirkt, wird eine sichere Befestigungsmöglichkeit der Vorrichtung im Tankstutzen angegeben. Der Stegring hält zentral der Steiltrieb und dient gleichzeitig als Auflagefläche für die Deckelteile in Verschluss-Stellung. Bevorzugt liegen die Deckelteile in Betankungsrichtung des Tankstutzens stromaufwärtig des Stegringes. Somit hält der Deckel abgestützt auf dem Stegring auch kräftigen Stoßbewegungen stand, die von einem etwaigen Kraftstoffdieb von der Außenseite durch den Tankstutzen aufgebracht werden könnten.

Um die Hubbewegung vom Stelltrieb auf die Deckelteile zu übertragen, ist zur Wirkverbindung zwischen Stelltrieb und Deckelteile ein in einer Führung axial zum Tankstutzen verschiebbares Bauteil vorgesehen, an dem die Drehachsen für die Deckelteile angeordnet sind. Bevorzugt ist das schiebbare Bauteil als Kolben in einem zylinderartigen Gehäuse ausgebildet, wobei das zylinderartige Gehäuse achsparallele Nuten für einen durchgreifenden Bolzen aufweist.

Dadurch, dass am verschiebbaren Bauteil ein Mittel zur Vorbelastung, insbesondere eine Feder, vorgesehen ist, um die Deckelteile in Richtung der Verschluss-Stellung vorzubelasten, wird die Zugriffsmöglichkeit zum Tankinhalt bei Manipulation an der Vorrichtung weiter erschwert.

Zum nachträglichen Einbau in einen Tankstutzen eines bereits vorhandenen Tanks ist die Vorrichtung in einem freien Rohrabschnitt vormontiert, der in den Tankstutzen einsetzbar ist.

Um einen sauberen und manipulationsfesten Abschluss an der Außenstirnseite des Tankstutzens nach dem nachträglichen Einbau des Rohrabschnittes zu gewährleisten ist ein Flansch vorgesehen, der an der Außenstirnseite des Tankstutzens aufliegt und Tankstutzen und Rohrabschnitt an der Außenseite miteinander fluchtend verbindet.

Nachfolgend wird ein Ausführungsbeispiel der Erfindung anhand der beiliegenden Zeichnungen detailliert beschrieben.

Darin zeigt:
- Fig. 1: in einem Querschnitt entlang der in Fig. 2 gekennzeichneten Linie I-I einen Tankstutzen mit eingebauter Sicherungsvorrichung,
- Fig. 2: eine Draufsicht des Stegringes und
- Fig. 3: die in Fig. 2 dargestellte Draufsicht mit zweiteiligem Deckel.

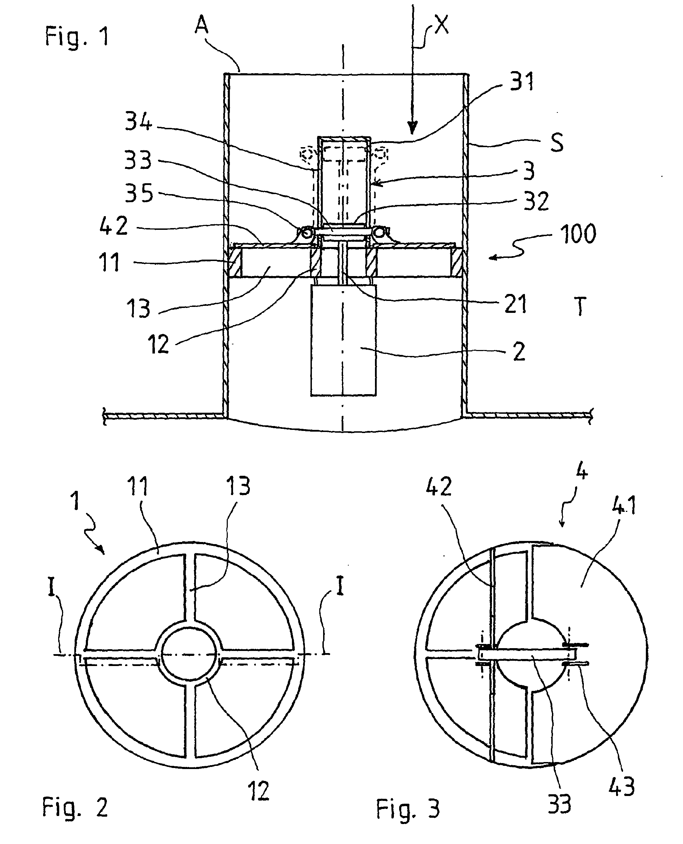

In Fig. 1 ist im angeschnittenen Querschnitt ein Tank T dargestellt. Am Tank T ist ein rohrförmiger Tankstutzen S angesetzt. Der Tankstutzen S dient zum Betanken des Tanks T von der Außenseite A in Strömungsrichtung X. In dem Tankstutzen S ist eine Vorrichtung 100 zur Sicherung des Tankinhalts angeordnet.

Die Vorrichtung 100 weist einen Stegring 1 auf, der an der Innenwandung des Tankstutzens S befestigt ist. In Fig. 2 ist der Stegring 1 in Draufsicht dargestellt. Der Stegring 1 besteht aus einem äußeren Ring 11, einem inneren Ring 12 sowie vier radial zwischen dem äußeren Ring 11 und dem inneren Ring 12 angeordneten Stegen 13.

Am inneren Ring 12 des Stegrings 1 ist in Betankungsrichtung X stromabwärtig ein Stelltrieb 2 befestigt. Der Stelltrieb 2 wird über eine nicht dargestellte Druckluftleitung von der Druckluftbremsanlage des Kraftfahrzeugs betätigt. Selbstverständlich sind auch andere Antriebsarten für der Stelltrieb, wie beispielsweise eine elektromagnetische oder hydraulische Verstellung denkbar. Der Stelltrieb 2 weist eine Schubstange 21 auf, die abhängig von den Steuerbedingungen im Stelltrieb 2 einen lateralen Stellhub in axialer Richtung des Tankstutzens S ausführt.

Auf der zum Betankungsstrom X aufwärtigen Seite des inneren Rings 12 des Stegrings 1 ist eine Führung 3 angesetzt, die als zylinderartiges Gehäuse 31 mit einem darin verschiebbar angeordneten Kolben 32 ausgestattet ist. Der Kolben 32 ist mit der Schubstange 21 des Stelltriebes 2 verbunden. Im Kolben 32 ist ein Durchgangsbolzen 33 angeordnet, der durch zwei einander diametral gegenüberstehenden Längsnuten 34 im zylinderartigen Gehäuse 31 hindurchgreift. An den äußeren Enden des Bolzens 33 ist je eine tangential zur Mittelachse des Tankstutzens S angeordnete Schwenkachse 35 vorgesehen.

An diesen Schwenkachsen 35 ist ein Deckel 4 schwenkbar angelenkt. Der Deckel 4 besteht aus einem ersten Deckelteil 41 und einem zweiten Deckelteil 42, die im wesentlichen halbierte Kreisringform aufweisen. Zur Aufnahme der Schwenkachse 35 am jeweiligen Deckelteil 41 bzw. 42 ist jeweils ein Doppelsteg 34 an den Deckelteilen 41, 42 angeformt, wie dies in Fig. 3 auf der rechten Seite für den ersten Deckelteil 41 in der Draufsicht dargestellt ist.

Weiter ist in Fig. 3 auf der linken Seite der zweite Deckelteil 42 in Offenstellung dargestellt. Entsprechend ist der Deckelteil 42 senkrecht zur Zeichenebene in der Fig. 3 orientiert.

Nachfolgend wird die Funktionsweise der Vorrichtung 100 zur Sicherung des Tankinhaltes unter Bezugnahme auf die Zeichnungen beschrieben.

In Fig. 1 ist die Vorrichtung 100 zur Tankinhaltssicherung in ihrer Verschluss-Stellung dargestellt. Dabei liegt der Deckel 4 mit seinen Deckelteilen 41, 42 auf dem Stegring 1 flächig auf. Diese Situation ist in Fig. 3 im rechten Teil der Zeichnung dargestellt.

Bei Betätigung des Stelltriebes 2, beispielsweise bei Erreichen des Betriebsdrucks für die Druckluftbremse z. B. oberhalb von 7 bar Luftdruck, schaltet der Stelltrieb 2 über Schubstange 21 die Vorrichtung 100 in ihre Offenstellung, die in Fig. 1 gestrichelt dargestellt ist. Durch die axiale Bewegung der Schubstange 21 entgegen der Betankungsrichtung X wird der Kolben 32 in dem zylinderartigen Gehäuse 31 in die in Fig. 1 oben gestrichelt dargestellte Position verschoben, womit über Bolzen 33 und Schwenkachse 35 die Deckelteile 41 und 42 angehoben werden und in die in Fig. 1 gestrichelt dargestellte Position verschwenken. Diese Situation ist in Fig. 3 auf der linken Seite für den zweiten Deckelteil 42 dargestellt.

Damit ist die Vorrichtung 100 nun in Offenstellung, d. h. der Tank T kann über den Tankstutzen S entsprechend Strömungsrichtung X betankt werden.

Beim Abstellen beispielsweise eines Lastkraftwagenmotors sinkt der Luftdruck unter den Grenzwert von 7 bar und der Stelltrieb 2 fällt in seine Grundstellung 2 zurück, womit über Schubstange 21, Kolben 32, Bolzen 33 und Schwenkachse 35 die Deckelteile 41, 42 in die auf dem Stegring 1 aufliegende Verschluss-Stellung gebracht werden. Nunmehr ist der Tankstutzen S für einen unbefugten Zugriff von außen A gesichert. Ein etwaiger Treibstoffdieb wird durch die Vorrichtung 100 in Verschluss-Stellung daran gehindert einen Schlauch oder ein Rohr zum Absaugen des Inhalts im Tank T einzuführen.

Da die Vorrichtung 100 nicht gasdicht schließt, ist selbstverständlich der üblicherweise erforderliche Gasaustausch über den Tankstutzen S weiterhin gegeben.

Somit liefert die erfindungsgemäße Vorrichtung ein Tanksicherheitssystem, mit dem ein Tankinhalt wirksam vor unbefugtem Zugriff gesichert ist.

### Bezugszeichenliste

- 100: Vorrichtung zur Tankinhaltssicherung
- 1: Stegring
- 11: äußerer Ring
- 12: innerer Ring
- 13: Steg

- 2: Stelltrieb
- 21: Schubstange

- 3: Führung
- 31: zylinderartiges Gehäuse
- 32: Kolben
- 33: Bolzen
- 34: Nut
- 35: Schwenkachse

- 4: Deckel
- 41: erstes Deckelteil
- 42: zweites Deckelteil
- 43: Doppelsteg

- A: Außenseite
- S: Tankstutzen
- T: Tank
- X: Betankungsrichtung

## Patentansprüche

1. Vorrichtung für einen Tankstutzen (S) eines Tankes (T) zur Sicherung des Tankinhalts vor unberechtigter Entnahme, wobei im Tankstutzen (S) ein betätigbarer Deckel (4) und ein elektrisch, hydraulisch oder pneumatisch betätigbarer Stelltrieb (2) vorgesehen sind und der Deckel (4) von dem Stelltrieb (2) zwischen einer Offenposition, bei der der Querschnitt des Tankstutzens (S) im wesentlichen frei flüssigkeitsdurchlässig ist, und einer Verschlussstellung, bei der der Querschnitt des Tankstutzens (S) im wesentlichen versperrt ist, abhängig von vorgebbaren Steuerbedingungen verstellbar ist, wobei der Stelltrieb (2) einen lateralen Stellhub aufweist, der entlang der Rohrachse des Tankstutzens (S) wirkt, **dadurch gekennzeichnet, dass** der Deckel (4) wenigstens zwei Deckelteile (41, 42) aufweist, die um tangential zur Rohrachse des Tankstutzens (S) angeordnete Drehachsen (35) schwenkbar gelagert sind, und der Stelltrieb (2) an einem im Tankstutzen (S) befestigten Stegring (1) angeordnet ist, wobei der laterale Stellhub des Stelltriebes (2) auf die Deckelteile (41, 42) wirkt und zur Wirkverbindung zwischen Stelltrieb (2) und Deckelteile (41, 42) ein in einer Führung (3) axial zum Tankstutzen (S) verschiebbares Bauteil (32, 33) vorgesehen ist, an dem die Drehachsen (35) für die Deckelteile (41, 42) angeordnet sind.

2. Vorrichtung nach Anspruch 1, **dadurch gekennzeichnet, dass** der Stelltrieb (2) ein Luftdrucksteuergerät ist, das über einen vorwählbaren Luftdruck den Deckel (4) in Offenposition und bei Unterschreiten des vorwählbaren Luftdruckes der Deckel (4) selbsttätig in die Verschluss-Stellung stellt.

3. Vorrichtung nach Anspruch 1 oder 2, **dadurch gekennzeichnet, dass** am verschiebbaren Bauteil (32, 33) ein Mittel zur Vorbelastung, insbesondere eine Feder, vorgesehen ist, um die Deckelteile (41, 42) in Richtung der Verschluss-Stellung vorzubelasten.

4. Vorrichtung zum nachträglichen Einbau in einen Tankstutzen (S) gemäß einem der vorangehenden Ansprüche, **dadurch gekennzeichnet, dass** die Vorrichtung (100) in einem freien Rohrabschnitt vormontiert ist, der in den Tankstutzen (S) einsetzbar ist.

5. Vorrichtung nach Anspruch 4, **dadurch gekennzeichnet, dass** ein Flansch vorgesehen ist, der an der Außenstirnseite des Tankstutzens aufliegt und Tankstutzen und Rohrabschnitt an der Außenseite miteinander fluchtend verbindet.

## Claims

1. A device for a tank connection piece (S) of a tank (T), for preventing unauthorised removal of the tank contents, the tank connection piece (S) being provided with an actuable cover (4) and a servo drive (2) which is actuable electrically, hydraulically or pneumatically, and the cover (4) being movable by the servo drive (2), in a manner dependent on predeterminable control conditions, between an open position in which liquid can flow through the cross-section of the tank connection piece (S) substantially freely and a sealed position in which the cross-section of the tank connection piece (S) is substantially closed off, the servo drive (2) having a lateral actuating stroke which acts along the tube axis of the tank connection piece (S), **characterised in that** the cover (4) has at least two cover parts (41, 42) which are mounted to be pivotal about pivot pins (35) arranged tangentially with respect to the tube axis of the tank connection piece (S), and the servo drive (2) is arranged on a webbed ring (1) which is secured inside the tank connection piece (S), the lateral actuating stroke of the servo drive (2) acting on the cover parts (41, 42) and a component (32, 33) being provided in order to make an operational connection between the servo drive (2) and the cover parts (41, 42), this component (32, 33) being displaceable in a guide (3) axially with respect to the tank connection piece (S), and the pivot pins (35) for the cover parts (41, 42) being arranged thereon.

2. A device according to Claim 1, **characterised in that** the servo drive (2) is an air pressure control unit which, above a preselectable air pressure, puts the cover (4) in the open position and, if the pressure falls below the preselectable air pressure, moves the cover (4) automatically into the sealed position.

3. A device according to Claim 1 or 2, **characterised in that** a means for preloading, in particular a spring, is provided on the displaceable component (32, 33) in order to pre-load the cover parts (41, 42) in the direction of the sealed position.

4. A device for subsequent installation in a tank connection piece (S) in accordance with one of the preceding claims, **characterised in that** the device (100) is pre-mounted in a free tubular section which may be inserted into the tank connection piece (S).

5. A device according to Claim 4, **characterised in that** a flange is provided which lies on the outer end face of the tank connection piece and connects the tank connection piece and the tubular section to one another at the outer side such that they are flush.

## Revendications

1. Dispositif pour une bouche (S) d'un réservoir (T) pour protéger le contenu du réservoir contre un prélèvement non autorisé, un couvercle actionnable (4) et une commande de réglage (2) électrique, hydraulique ou pneumatique étant prévus dans la bouche (S) de réservoir, et le couvercle (4) pouvant être déplacé par la commande de réglage (2) entre une position ouverte dans laquelle la section transversale de la bouche (S) de réservoir laisse essentiellement passer librement le liquide, et une position de fermeture dans laquelle la section transversale de la bouche (S) de réservoir est essentiellement obturée, en fonction de conditions de commande pouvant être prédéfinies, la commande de réglage (2) pouvant effectuer une course de réglage latéral qui agit le long de l'axe du tube de la bouche (S) de réservoir, **caractérisé en ce que** le couvercle (4) présente au moins deux parties de couvercle (41, 42) qui sont logées pivotantes autour d'un axe pivot (35) disposé tangentiellement à l'axe du tube de la bouche (S) de réservoir, et la commande de réglage (2) est disposée sur un anneau à âme (1) fixé dans la bouche (S) de réservoir, l'élévateur de réglage latéral de la commande de réglage (2) agissant sur les parties de couvercle (41, 42) une pièce de construction (32, 33) pouvant être déplacé axialement par rapport à la bouche (S) de réservoir étant prévue pour la liaison agissante entre la commande de réglage (2) et les parties de couvercle (41, 42), sur laquelle pièce de construction sont disposés les axes pivot (35) pour les pièces de couvercle (41, 43).

2. Dispositif selon la revendication 1, **caractérisé en ce que** la commande de réglage (2) est un dispositif de commande à air comprimé qui au-dessus d'une pression d'air pouvant être choisie précédemment place le couvercle (4) en position ouverte et lors du passage en dessous de la pression d'air place automatiquement le couvercle (4) en position fermée.

3. Dispositif selon la revendication 1 ou 2, **caractérisé en ce qu'**il est prévu sur la pièce de construction déplaçable (32, 33) un moyen de précontrainte, notamment un ressort, pour précontraindre les parties de couvercle (41, 42) en direction de la position de fermeture.

4. Dispositif pour l'installation postérieure dans une bouche (S) de réservoir selon l'une des revendications précédentes, **caractérisé en ce que** le dispositif (100) est prémonté dans une section de tube libre qui peut être introduite dans la bouche (S) de réservoir.

5. Dispositif selon la revendication 4, **caractérisé en ce qu'**il est prévu une collerette qui est placée sur le coté frontal extérieur de la bouche (S) de réservoir et qui relie, en les alignant, la bouche de réservoir et la section de tube avec la face extérieure.
